# EUROPEAN PATENT APPLICATION

(11) **EP 2 199 865 A2**
(43) Date of publication of application: **23.06.2010**
(21) Application number: 09015436.0
(22) Date of filing: 14.12.2009
(51) Int. Cl.: G03G 15/00

(54) **Display device**

(30) Priority: 15.12.2008 JP 2008318323
(71) Applicant: Brother Kogyo Kabushiki Kaisha, Nagoya-shi, Aichi-ken 467-8561 (JP)
(72) Inventor: Yasoshima, Mizuho, Nagoya-shi Aichi-ken 467-8562 (JP)
(74) Representative: Kuhnen & Wacker

(57) **Abstract**

A display device (1) is placed on a document table (101) of a copy machine (100) such that a reading area of the copy machine (100) and a display screen (10) of the display device (1) face each other. Then, the position of the display device (1) is adjusted such that a rear surface identification mark (11), which is a straight line and indicates the position of a short side of the display screen (10), and a short side reference line (107), which is a short side of the document table (101), are connected by a straight line, and such that a rear surface identification mark (12), which is a straight line and indicates the position of a long side of the display screen (10), and a long side reference line (108), which is a long side of the document table (101), are connected by a straight line.

## Description

### CROSS-REFERENCE TO RELATED APPLICATION

This application claims priority to Japanese Patent Application No. 2008-318323, filed December 15, 2008, the content of which is hereby incorporated herein by reference in its entirety.

### BACKGROUND

The present disclosure relates to a display device with a housing provided with a display screen.

In recent years, a display device, which is an electronic device that stores information such as a schedule and a document in a memory and displays the information on a display screen, is widely used. This type of display device is compact and lightweight, and may therefore be easily carried about. When a user desires to print the information displayed on the display screen of this type of display device, the user may connect the display device to a printer using a cable and may print the information. However, the user may desire to easily output the information displayed on the display screen of the display device, without having to connect the display device to the printer and perform a print setting. To address such a case, it has been proposed that the display device is placed on a document table, which is a document reading area of a copy machine, such that the document table and the display screen face each other, and the information displayed on the display screen is copied (refer to Japanese Laid-Open Patent Publication No. 2006-254224, for example).

### SUMMARY

With the above-described known display device, when a user tries to adjust the position of the display screen to align with the reading area of the copy machine on the document table, the user is not able to directly and visually confirm the display screen. Therefore, it may be difficult for the user to adjust the position of the display screen to an optimum position with respect to the reading area of the copy machine. In such a case, the entire area of the display screen may not be copied.

Various exemplary embodiments of the broad principles derived herein provide a display device that allows a user to easily adjust the position of a display screen of the display device to an optimum position with respect to a reading area of a copy machine when the user copies the display screen of the display device using the copy machine.

A display device of the present invention includes a housing that includes at least a front surface and a rear surface, a display screen that displays information on the front surface of the housing, and an identification mark that is provided on a surface other than the front surface and that indicates a position of the display screen on the front surface. Therefore, even when it is difficult to visually check the display screen of the display device, the user may place the display device on the document table of the copy machine using the identification mark as an indication, so that the user may adjust the position of the display screen to an optimal position with respect to the reading area of the copy machine.

The identification mark may be provided on the rear surface. When the display device is placed such that the display screen of the display device and the document table of the copy machine face each other, the user may visually check the rear surface. Therefore, even when it is difficult to visually check the display screen of the display device, the user may place the display device on the document table of the copy machine using, as an indication, the identification mark provided on the rear surface that may be visually checked, so that the user may adjust the position of the display screen with respect to the reading area of the copy machine.

The housing may include a side surface and the identification mark may be provided on the side surface. When the display device is placed such that the display screen of the display device and the document table of the copy machine face each other, and a document cover is closed, the user may visually check the side surface. Therefore, even when it is difficult to visually check the rear surface of the display device, the user may place the display device on the document table of the copy machine using, as an indication, the identification mark provided on the side surface that may be visually checked, so that the user may adjust the position of the display screen with respect to the reading area of the copy machine.

The display screen may have a rectangular shape in a front view, and the identification mark may indicate positions of adjacent two sides of an outline of the display screen. In this case, the adjacent two sides extend in different directions, and may be used as an indication of the two directions in an upper and lower direction or a right and left direction, for example. Therefore, the user may place the display device on the document table of the copy machine using, as an indication, the identification mark that indicates the positions of the adjacent two sides of the outline of the display screen, so that the user may accurately adjust the display screen with respect to the reading area of the copy machine, from two directions.

The display screen may have a rectangular shape in a front view, and the identification mark may indicate a position of at least one corner of an outline of the display screen. In this case, the user may place the display device on the document table of the copy machine using, as an indication, the identification mark that indicates the position of at least one corner of the outline of the display screen, so that the user may adjust the position of the display screen with respect to the reading area of the copy machine.

The identification mark may indicate a position of an upper left corner of the outline of the display screen, as the position of the at least one corner. Normally, in many cases, the upper left corner of the display screen may be used as a display reference point. Therefore, the user may place the display device on the document table of the copy machine using, as an indication, the identification mark that indicates the position of the upper left corner of the outline of the display screen, so that the user may adjust the position of the display screen with respect to the reading area of the copy machine. Further, the display reference point on the display screen may be positioned at any desired position within the reading area of the copy machine.

The identification mark may indicate a position of a lower right corner of the outline of the display screen, as the position of the at least one corner. In this case, the lower right corner of the display screen may be located at a corner opposing the upper left corner of the display screen. Therefore, the user may know the size of the display screen based on the positional relationship of the identification marks that respectively indicate the positions of the upper left corner and the lower right corner.

The identification mark may indicate positions of four corners of the outline of the display screen. In this case, the user may easily know the position of the display screen. Further, the user may place the display device on the document table of the copy machine using, as an indication, the identification mark that indicates the four corners of the display screen, so that the user may easily adjust the position of the display screen with respect to the reading area of the copy machine.

The identification mark may be provided in a plurality, one of the plurality of identification marks indicating an upper corner of the outline of the display screen, and another of the plurality of identification marks indicating a lower corner of the outline of the display screen. In addition, the one of the plurality of identification marks may be different from the other one of the plurality of identification marks. In this case, even when the user is not able to visually check the display screen, the user may determine the upper and lower direction of the display device based on the identification marks.

The identification mark may indicate an outline of an area of the rear surface onto which the display screen is projected. In this case, the user may easily know the position of the entire display screen. Therefore, the user may place the display device on the document table of the copy machine using, as an indication, the outline provided on the rear surface, so that the user may easily adjust the position of the display screen with respect to the reading area of the copy machine.

The identification mark may indicate a position of a center of the display screen. In this case, the user may place the display device on the document table of the copy machine using, as an indication, the identification mark that indicates the position of the center of the display screen, so that the user may adjust the display screen with respect to the center of the reading area of the copy machine.

The identification mark may be formed by a line. In this case, the identification mark may be formed easily and at low cost.

The identification mark may reach an end of at least one of the rear surface and a side surface that is provided with the identification mark. In this case, when the user adjusts the position of the display screen with respect to the reading area of the copy machine, the user may directly align the identification mark with the reference position on the copy machine. Accordingly, the user may accurately adjust the position of the display screen with respect to the reading area.

The identification mark may be formed as a recess relative to an outer surface of the housing. In this case, even when the user closes a document cover in a state where the display device is placed such that the display screen of the display device and the document table of the copy machine face each other, the identification mark and the document cover may not interfere with each other. Accordingly, the document cover may be stably closed.

### BRIEF DESCRIPTION OF THE DRAWINGS

Exemplary embodiments will be described below in detail with reference to the accompanying drawings in which:

FIG. 1 is a front perspective view of a display device when viewed from the right and above;

FIG. 2 is a rear perspective view of the display device in which an upper side surface and a left side surface are each provided with a side surface identification mark and a rear surface is provided with rear surface identification marks, when viewed from the left and above;

FIG. 3 is a rear perspective view of the display device in which a lower side surface and a right side surface are each provided with a side surface identification mark and the rear surface is provided with the rear surface identification marks, when viewed from the right and below;

FIG. 4 is a block diagram showing an electrical configuration of the display device;

FIG. 5 is a perspective view of a copy machine when the display device is placed on a document table, when viewed from the right and above;

FIG. 6 is a perspective view of the copy machine when the display device is placed on the document table and a document cover is closed, when viewed from the left and above;

FIG. 7 is a rear perspective view of a display device in which the rear surface is provided with arrow identification marks, when viewed from the left and above;

FIG. 8 is a rear perspective view of a display device in which the lower side surface and the right side surface are each provided with a side surface identification mark, when viewed from the right and below;

FIG. 9 is a rear perspective view of a display device in which the rear surface is provided with rear surface identification marks, when viewed from the left and above;

FIG. 10 is a rear perspective view of a display device in which the rear surface is provided with a square-shaped identification mark, when viewed from the left and above;

FIG. 11 is a rear perspective view of a display device in which the rear surface is provided with a cross-shaped identification mark and a square-shaped identification mark, when viewed from the left and above;

FIG. 12 is a rear perspective view of a display device in which the rear surface is provided with a recessed identification mark, when viewed from the left and above;

FIG. 13 is a rear perspective view of a display device in which the rear surface, the upper side surface and the left side surface are provided with identification marks indicating the outline and the center of a display screen, when viewed from the left and above;

FIG. 14 is a perspective view of a copy machine when the display device shown in FIG. 13 is placed on the document table, when viewed from the right and above; and

FIG. 15 is a perspective view of a sheet-shaped display device.

### DETAILED DESCRIPTION

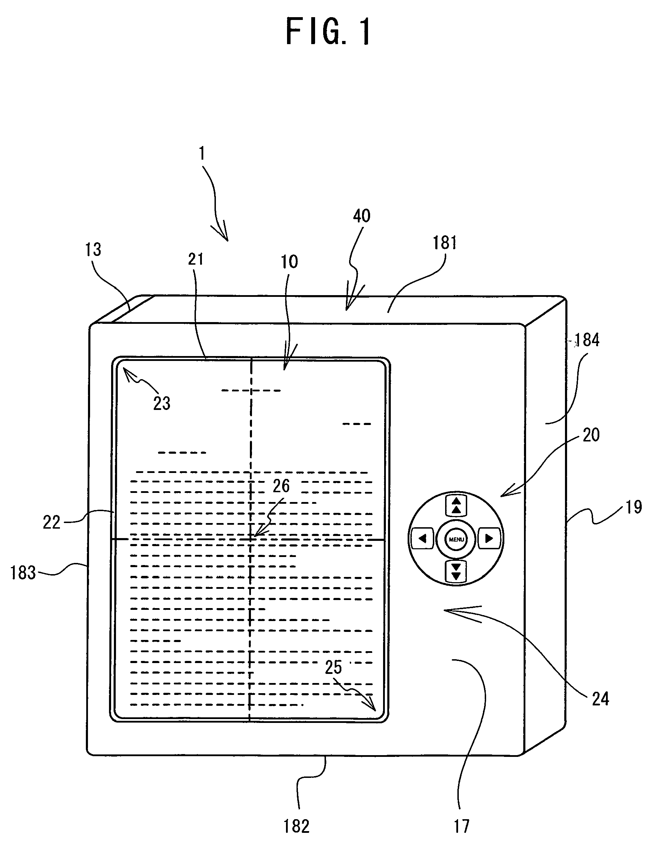

Hereinafter, exemplary embodiments of a display device 1 will be described with reference to the appended drawings. First, a physical configuration of the display device 1 will be described with reference to FIGS. 1 to 3. In FIG. 1, the right and left direction of the page is the right and left direction of the display device 1, and the upper and lower direction of the page is the upper and lower direction of the display device 1.

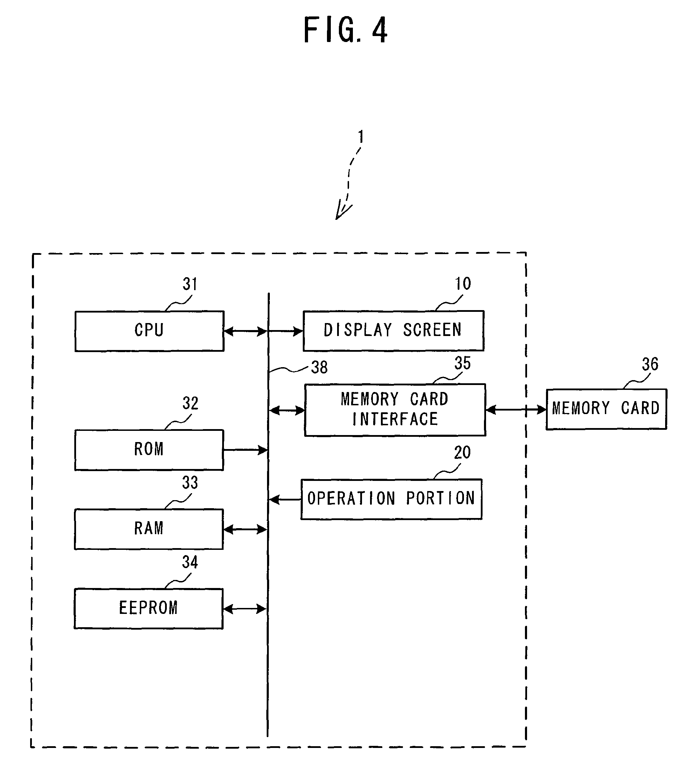

As shown in FIG. 1, the display device 1 includes a substantially rectangular parallelepiped housing 40. The housing 40 includes a front surface 17, an upper side surface 181, a lower side surface 182, a left side surface 183, a right side surface 184 and a rear surface 19. A rectangular-shaped display screen 10, which displays information (content), is provided on the front surface 17 of the display device 1. The size of the display screen 10 is, for example, A5 portrait size. An upper left corner 23 of the display screen 10 is a reference position when information is displayed. Short sides of the display screen 10 are formed in the right and left direction of the display device 1. Long sides of the display screen 10 are formed in the upper and lower direction of the display device 1. An operation portion 20 is provided on an outer peripheral portion 24 at a center of the long side on the right side of the display screen 10. The operation portion 20 is provided with a plurality of buttons. The operation portion 20 may be used when a user inputs various instructions to the display device 1. Although not shown in the figures, an insertion slot is provided on the left side surface 183 of the display device 1. A memory card 36 (refer to FIG. 4) may be inserted into the insertion slot.

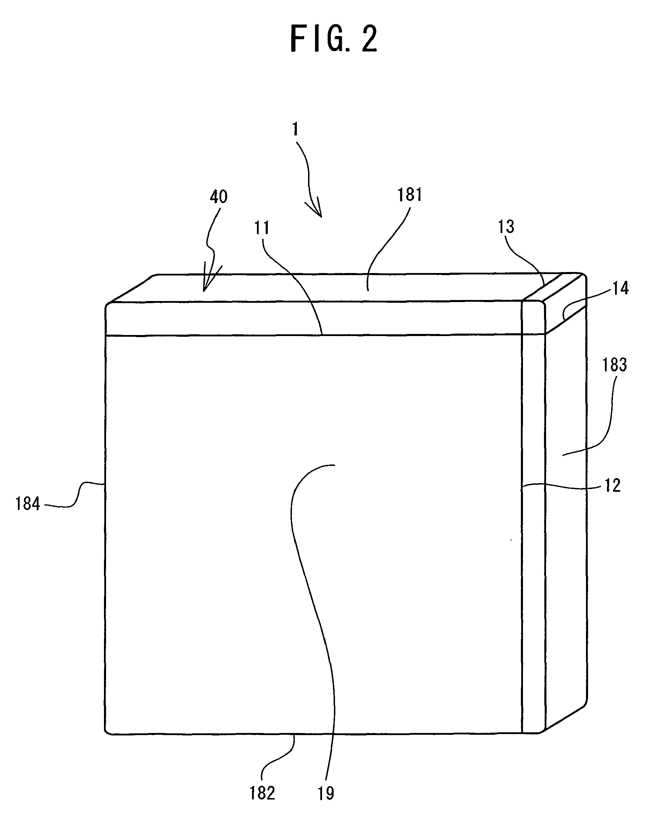

As shown in FIG. 2, rear surface identification marks 11 and 12 are provided on the rear surface 19 of the display device 1. The rear surface identification marks 11 and 12 are straight lines that indicate the position of the display screen 10 (refer to FIG. 1), from the rear surface 19 of the display device 1. The rear surface identification marks 11 and 12 may be printed or formed as grooves. This also applies to other identification marks to be described below. The rear surface identification mark 11 indicates the position of a short side 21 (refer to FIG. 1) on an upper portion of the display screen 10. More specifically, the rear surface identification mark 11 is a straight line corresponding to the short side 21 when the display screen 10 is projected onto the rear surface 19. The rear surface identification mark 12 indicates the position of a long side 22 (refer to FIG. 1) on the left side of the display screen 10. More specifically, the rear surface identification mark 12 is a straight line corresponding to the long side 22 when the display screen 10 is projected onto the rear surface 19. The rear surface identification marks 11 and 12 intersect at right angles at the position indicating the upper left corner 23 of the display screen 10 when the display screen 10 is projected onto the rear surface 19. The rear surface identification marks 11 and 12 respectively reach both ends of the rear surface 19 of the display device 1.

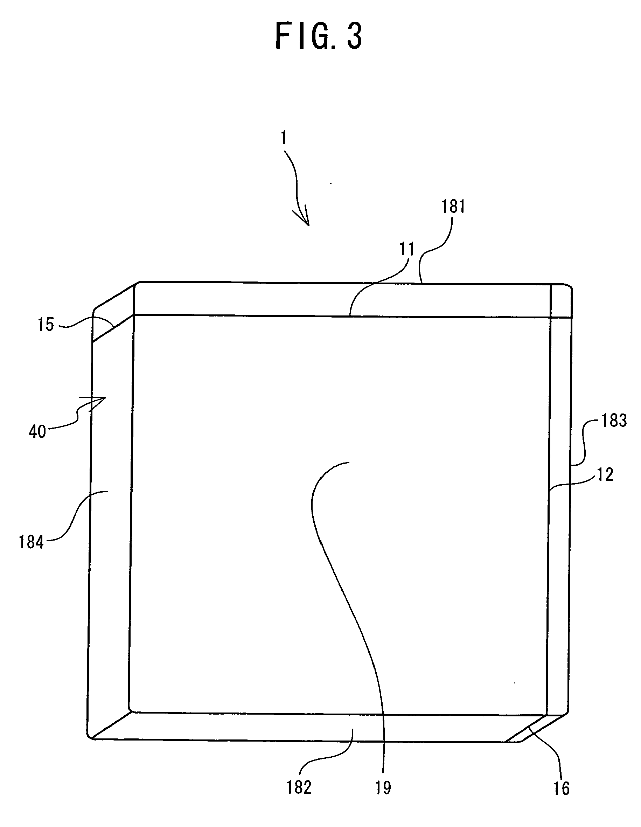

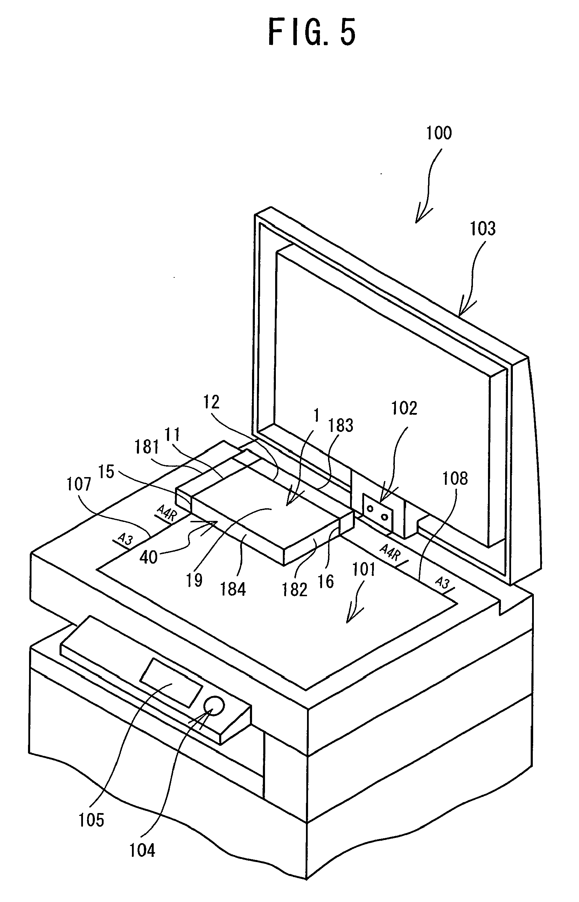

As shown in FIGS. 2 and 3, side surface identification marks 13, 14, 15 and 16 are respectively provided on the upper side surface 181, the left side surface 183, the right side surface 184 and the lower side surface 182 of the display device 1. The side surface identification marks 13, 14, 15 and 16 are linear identification marks that indicate the position of the display screen 10, from the side surfaces 181, 183, 184 and 182, respectively, of the display device 1. The side surface identification marks 13 and 16 are straight lines that indicate the position of the long side 22 of the display screen 10. More specifically, the side surface identification marks 13 and 16 are straight lines that are formed by extending the straight line corresponding to the long side 22 to the upper side surface 181 and the lower side surface 182 when the display screen 10 is projected onto the rear surface 19. The side surface identification marks 14 and 15 are straight lines that indicate the position of the short side 21 of the display screen 10. More specifically, the side surface identification marks 14 and 15 are straight lines that are formed by extending the straight line corresponding to the short side 21 to the left side surface 183 and the right side surface 184 when the display screen 10 is projected onto the rear surface 19. The side surface identification marks 13, 14, 15 and 16 respectively reach both ends of the side surfaces 181, 183, 184 and 182 of the display device 1. The side surface identification marks 13 and 16 are connected to the rear surface identification mark 12. The side surface identification marks 14 and 15 are connected to the rear surface identification mark 11. The identification marks provided on the rear surface 19 and the side surfaces 181 to 184 of the display device 1 may be used for positioning when the display screen 10 is copied by a copy machine 100 (refer to FIG. 5), which will be described in more detail below.

An electrical configuration of the display device 1 will be described with reference to FIG. 4. As shown in FIG. 4, the display device 1 includes a CPU 31. A ROM 32, a RAM 33, an EEPROM 34, the display screen 10, a memory card interface 35 and the operation portion 20 are connected to the CPU 31 via a bus 38. The memory card 36 may be connected to the memory card interface 35. Hereinafter, the CPU 31, the ROM 32, the RAM 33, the EEPROM 34 and the memory card 36 will be described.

The CPU 31 performs main control of the display device 1. The CPU 31 performs various types of computations and processing to output an image on the display screen 10 of the display device 1, in accordance with a control program stored in the ROM 32. The ROM 32 is a read-only memory device. The ROM 32 stores a program etc., such as BIOS, which are executed by the CPU 31. The RAM 33 is a random access memory element. The RAM 33 includes various storage areas that store various setting values read out from the ROM 32 or the EEPROM 34, and results calculated by the CPU 31, according to need. The EEPROM 34 is a nonvolatile memory element that can be read and written, and retains stored data even if power is turned off. The memory card 36 is an external storage medium that stores various types of information displayed on the display screen 10, for example. The information stored in the memory card 36 and information downloaded from the outside may be displayed on the display screen 10, so that the user may view such information.

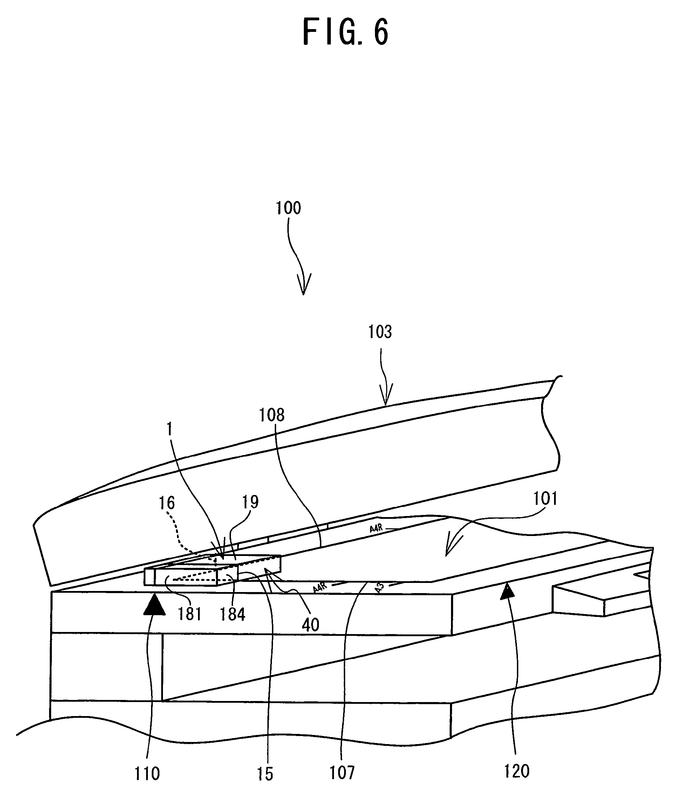

A copying method when the user uses the copy machine 100 to copy the display screen 10 (refer to FIG. 1) of the display device 1 on which information is displayed will be described with reference to FIGS. 5 and 6.

The copy machine 100 will be described with reference to FIG. 5. The copy machine 100 shown in FIG. 5 is a well-known copy machine, and capable of copying an image, a character, a symbol, etc. onto paper etc. The copy machine 100 is an example, and may be a complex machine that has, for example, a facsimile function, an printer function and a scanner function, in addition to a copy function. In FIG. 5, it is assumed that the left obliquely downward direction of the page is the front direction of the copy machine 100, and the right obliquely upward direction of the page is the rear direction of the copy machine 100. Further, it is assumed that the right obliquely downward direction of the page is the right direction of the copy machine 100, and the left obliquely upward direction of the page is the left direction of the copy machine 100.

A copy button 104 and a liquid crystal panel 105 are provided on the front side of the copy machine 100. The copy button 104 is used to instruct the copy machine 100 to start copying. The paper size setting, the enlargement/reduction ratio setting and the like may be performed on the liquid crystal panel 105. A document table 101, which has a rectangular shape in a plan view and is formed of transparent glass, is provided on the rear side of the liquid crystal panel 105. An object to be copied may be placed on the document table 101. A document cover 103 is pivotally provided via a hinge 102 to the document table 101 such that the document cover 103 may be opened and closed. The object to be copied that is placed on the document table 101 may be pressed by the document cover 103. The hinge 102 is provided at a rear end portion of a top surface of the copy machine 100. A corner reference system is used for the copy machine 100. The corner reference system is a system in which the object to be copied is aligned to the rear left corner, which is formed by a short side reference line 107 and a long side reference line 108, when the user places the object to be copied on the document table 101. The short side reference line 107 is a short side on the left side of the document table 101. The long side reference line 108 is a long side on the rear side of the of the document table 101.

Hereinafter, the copying method of the display screen 10 of the display device 1 will be described. As shown in FIG. 5, the user may place the display device 1 on the document table 101 such that the document table 101 and the display screen 10 (refer to FIG. 1) face each other in a state where the display device 1 is overlaid with the left rear corner of the document table 101. At this time, the user may check, from above the document table 101, the rear surface identification marks 11 and 12 provided on the rear surface 19 of the display device 1, and the short side reference line 107 and the long side reference line 108 provided on the document table 101. Then, the user may adjust the position of the display device 1 such that the rear surface identification mark 11 and the short side reference line 107 are connected by a straight line, and such that the rear surface identification mark 12 and the long side reference line 108 are connected by a straight line. Thus, it is possible to directly align the rear surface identification marks 11 and 12 with the short side reference line 107 and the long side reference line 108, respectively. As a consequence, it is possible to adjust the display screen 10 from two directions, with respect to a reading area of the document table 101.

As shown in FIG. 5, it is also possible to perform the positioning of the display screen 10 of the display device 1 with respect to the reading area of the copy machine 100, using the side surface identification mark 15 provided on the right side surface 184 and the side surface identification mark 16 provided on the lower side surface 182 of the display device 1. Further, the rear surface identification marks 11 and 12 intersect at right angles at the position indicating the upper left corner 23 of the display screen 10. Therefore, in a case where the display device 1 is placed on the document table 101 using the point at which the rear surface identification marks 11 and the 12 intersect at right angles, the reference position when information is displayed on the display screen 10 may be positioned at any desired position within the reading area of the copy machine.

Next, the user may close the document cover 103. When the user knows the size (for example, A5) of the display screen 10, the user may set the size (for example, A5) of the display screen 10 as a paper size, using a touch panel provided on the liquid crystal panel 105. Then, when the user presses the copy button 104, information such as a character displayed on the display screen 10 may be copied to paper. In this case, as described above, the positions of the rear left corner of the document table 101 and the corner of the display screen 10 may be appropriately aligned. Therefore, only the area of the display screen 10 may be copied. When the user does not know the size of the display screen 10, the user may check scales (A4R, A3 and the like) provided on the document table 101, and the positions of the right side surface 184 and the lower side surface 182 of the housing 40. Then, the user may select an appropriate paper size. In addition, the copy machine 100 may have a function that detects the size of the object to be copied placed on the document table 101 when the document cover 103 is closed, and may automatically select the paper size that fits the size of the object to be copied. When this function is used, a paper size larger than the size of the object placed on the document table 101 of the display device 1 may be selected. Accordingly, it is possible to reliably copy the entire display screen 10.

As shown in FIG. 6, in a state where the document cover 103 is closed, the document table 101 is slightly visible because of the thickness of the display device 1. In this case, although it is difficult to visually check the rear surface 19 of the display device 1, it is possible to visually check the side surfaces 181, 182 and 184. A positioning method of the display device 1 in this case will be described below. As described above, the side surface identification mark 15 is provided on the right side surface 184 of the display device 1. Further, the side surface identification mark 16 is provided on the lower side surface 182 (refer to FIG. 5). Therefore, for example, in a case where the user performs the positioning of the display device 1 after closing the document cover 103, or in a case where the position of the display device 1 is displaced when the document cover 103 is closed, the user may perform the positioning using the side surface identification marks 15 and 16. More specifically, the user confirms the side surface identification marks 15 and 16, the short side reference line 107 and the long side reference line 108. Then, the user moves the display device 1 such that the side surface identification mark 15 and the short side reference line 107 are connected by a straight line, and such that the side surface identification mark 16 and the long side reference line 108 are connected by a straight line. Thus, it is possible to directly align the side surface identification marks 15 and 16 with the short side reference line 107 and the long side reference line 108, respectively. As a consequence, the user may accurately adjust the position of the display screen 10 with respect to the reading area.

In this manner, even when it is difficult to visually check the rear surface 19 of the display device 1, the positioning of the display screen 10 of the display device 1 with respect to the reading area of the copy machine 100 may be easily performed, owing to the identification marks provided on the side surfaces 181 to 184. For example, as shown in FIG. 6, side surface adjustment marks 110 and 120, which are marks indicating respective positions of the long side reference line 108 and the short side reference line 107 of the document table 101, may be provided on side surfaces of the copy machine 100. In this case, the positioning of the display screen 10 of the display device 1 with respect to the reading area of the copy machine 100 may more easily be performed.

As described above, in a case where the identification marks 11 to 16 are used, when the user places the display device 1 on the document table 101, the user may adjust the display device 1 to an optimal position at which the entire area of the display screen 10 may be reliably copied. When the user knows the size of the display screen 10, it is possible to copy only the display screen 10, and the appearance of the copied result may be good. Because the identification marks of the display screen 10 are formed of straight lines, the identification marks may be formed easily and at low cost.

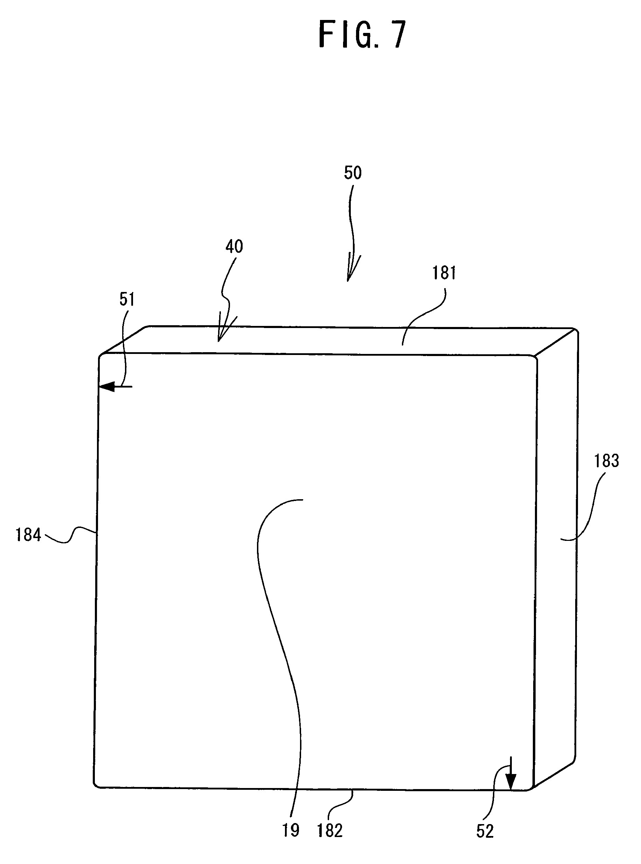

Hereinafter, other embodiments in which an identification mark is provided on at least one of the rear surface 19 and the side surfaces 181 to 184 will be described with reference to FIGS. 7 to 14.

Arrow identification marks 51 and 52 may be provided only on the rear surface 19 of a display device 50 as shown in FIG. 7. The arrow identification marks 51 and 52 indicate the position of the display screen 10 (refer to FIG. 1) by arrows. More specifically, similar to the above-described rear surface identification mark 11, the arrow identification mark 51 is an arrow that indicates the position of the short side 21 (refer to FIG. 1) of the display screen 10, and points to the end on the side that is in contact with the right side surface 184 (refer to FIG. 3) of the rear surface 19. Similar to the above-described rear surface identification mark 12, the arrow identification mark 52 is an arrow that indicates the position of the long side 22 (refer to FIG. 1) of the display screen 10, and points to the end on the side that is in contact with the lower side surface 182 (refer to FIG. 3) of the rear surface 19.

When the user copies the display screen 10 of the display device 50 using the copy machine 100, the user may adjust the position of the display device 50 such that the arrow identification mark 51 and the short side reference line 107 are connected by a straight line, and such that the arrow identification mark 52 and the long side reference line 108 are connected by a straight line. Thus, the positions of the short side 21 and the long side 22 of the display screen 10 of the display device 50 are shown by the arrows in this manner, so that the user may easily know the position of the display screen 10. As a consequence, the user may easily perform the positioning of the display screen 10 with respect to the reading area of the copy machine 100.

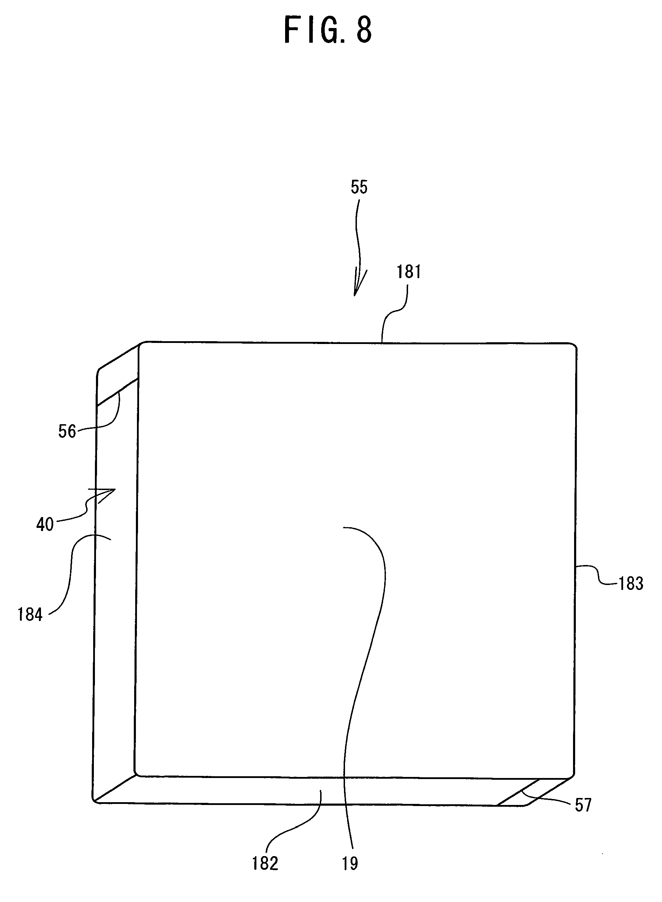

Identification marks may be provided only on the side surfaces 182 and 184 of a display device 55 as shown in FIG. 8. The right side surface 184 and the lower side surface 182 of the display device 55 are provided with linear side surface identification marks 56 and 57, respectively, that indicate the position of the display screen 10 (refer to FIG. 1). The side surface identification mark 56 indicates the position of the short side 21 of the display screen 10. The side surface identification mark 57 indicates the position of the long side 22 of the display screen 10. The side surface identification marks 56 and 57 respectively reach both ends of the right side surface 184 and the lower side surface 182 of the display device 55. That is, the side surface identification marks 56 and 57 are the same as the above-described side surface identification marks 15 and 16, respectively. Therefore, a copying method of the display device 55 may be the same as the copying method using the side surface identification marks 15 and 16 that is described above with reference to FIG. 6, and further explanation is therefore omitted here.

Thus, also when the identification marks are provided only on the side surfaces 182 and 184 of the display device 55, it is possible to easily perform the positioning of the display screen 10 of the display device 55 with respect to the reading area of the copy machine 100.

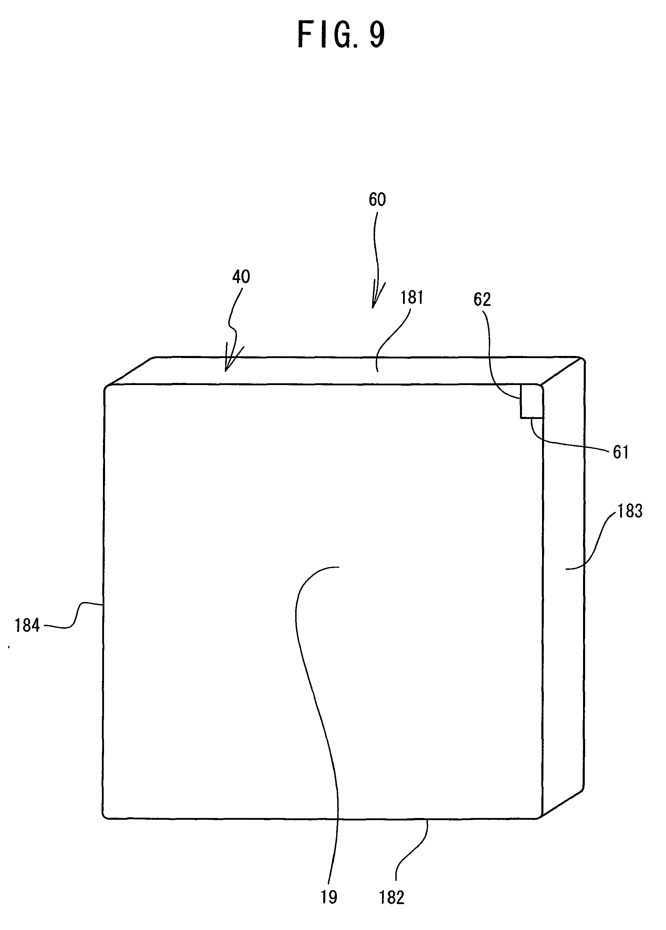

Rear surface identification marks 61 and 62 may be provided on the rear surface 19 of a display device 60 as shown in FIG. 9. The rear surface identification marks 61 and 62 are straight lines that indicate the position of the display screen 10 (refer to FIG. 1). More specifically, the rear surface identification mark 61 indicates the position of the short side 21 (refer to FIG. 1) of the display screen 10. The rear surface identification mark 61 is a straight line that extends from the position indicating the upper left corner 23 (refer to FIG. 1) of the display screen 10 to an upper end portion of the rear surface 19. The rear surface identification mark 62 indicates the position of the long side 22 (refer to FIG. 1) of the display screen 10. The rear surface identification mark 62 is a straight line that extends from the position indicating the upper left corner 23 of the display screen 10 to a left end portion of the rear surface 19. Therefore, the rear surface identification marks 61 and 62 form a right angle at the position indicating the upper left corner 23 of the display screen 10.

When the user copies the display screen 10 of the display device 60 using the copy machine 100, the user may see the document table 101 from above and adjust the position of the display device 60 such that the corner, which is formed by the rear surface identification marks 61 and 62 and indicates the upper left corner 23 of the display screen 10 of the display device 60, is overlaid with the rear left corner of the document table 101.

Thus, the position of the upper left corner 23 of the display screen 10 is indicated by the rear surface identification marks 61 and 62 provided on the rear surface 19 of the display device 60, so that the user may easily know the position of the display screen 10. Accordingly, the user may easily perform the positioning of the display screen 10 of the display device 60 with respect to the reading area of the copy machine 100.

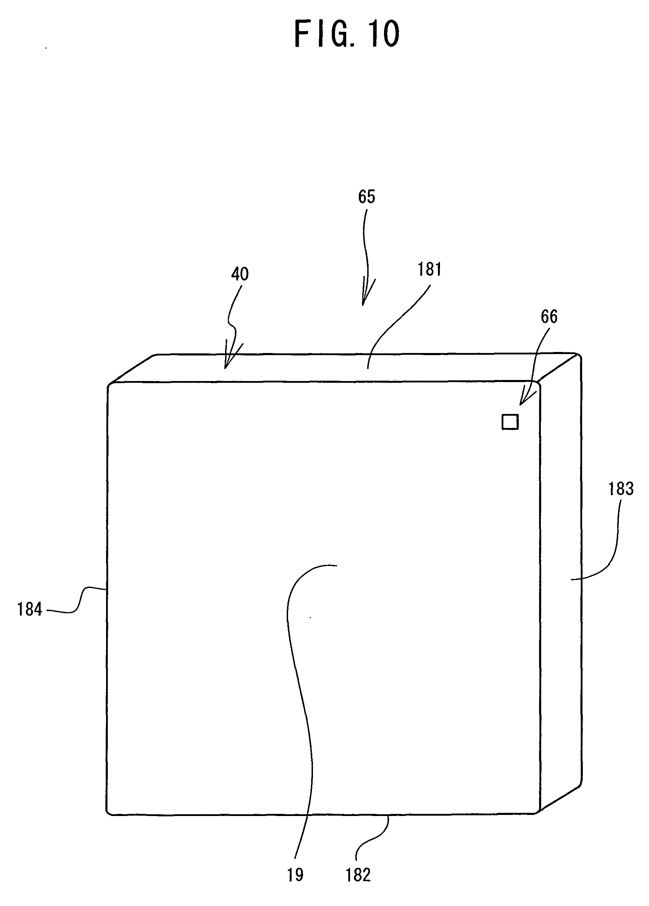

A square-shaped identification mark 66 may be provided on the rear surface 19 of a display device 65 as shown in FIG. 10. The square-shaped identification mark 66 has a square shape and indicates the position of the upper left corner 23 of the display screen 10 (refer to FIG. 1). The square-shaped identification mark 66 may be formed by the outline of the square, with 1 cm sides, for example.

When the user copies the display screen 10 of the display device 65 using the copy machine 100, the user may see the document table 101 from above and adjust the position of the display device 65 such that the square-shaped identification mark 66 is overlaid with the left rear corner of the document table 101.

Thus, the position of the upper left corner 23 of the display screen 10 of the display device 65 is indicated by the square, so that the user may easily perform the positioning of the display screen 10 of the display device 65 with respect to the reading area of the copy machine 100.

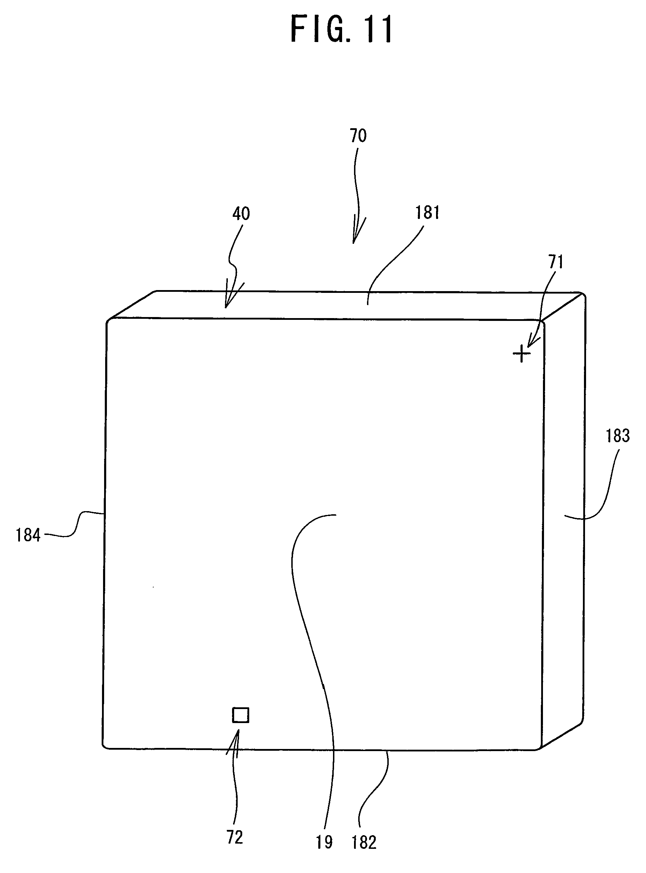

A cross-shaped identification mark 71 and a square-shaped identification mark 72 may be provided on the rear surface 19 of a display device 70 as shown in FIG. 11. The cross-shaped identification mark 71 indicates the position of the upper left corner 23 of the display screen 10 (refer to FIG. 1) of the display device 70. The square-shaped identification mark 72 indicates the position of a lower right corner 25 (refer to FIG. 1) of the display screen 10 of the display device 70. The cross-shaped identification mark 71 may be formed by, for example, two straight lines that intersect at a right angle, and each of the lines may be approximately 1 cm in length. The square-shaped identification mark 72 may be similar to the square-shaped identification mark 66 shown in FIG. 10.

When the user copies the display screen 10 of the display device 70 using the copy machine 100, the user may see the document table 101 from above and adjust the position of the display device 70 such that the cross-shaped identification mark 71 is overlaid with the rear left corner of the document table 101. Further, the user may know the position of the lower right corner 25 of the display screen 10 by checking the square-shaped identification mark 72 on the rear surface 19 of the display device 70. Therefore, even when the user does not know the size of the display screen 10 in advance, the user may confirm the size of the display screen 10 by checking the square-shaped identification mark 72 on the rear surface 19 of the display device 70 and an indicator that is provided on an outer peripheral portion of the document table 101 and indicates the paper size such as "A4R", "A3" and the like. In this case, the user may specify an optimal paper size, so that only the display screen 10 may be copied. In addition, as the user may know the size of the display screen 10, the user may appropriately specify the enlargement/reduction ratio.

Moreover, as different marks (namely, the cross-shaped identification mark 71 and the square-shaped identification mark 72) are provided in the upper and lower direction of the display device 70, the user may easily know the upper and lower direction of the display device 70 from the rear surface 19 of the display device 70. Thus, the display screen 10 may be copied at an optimal position.

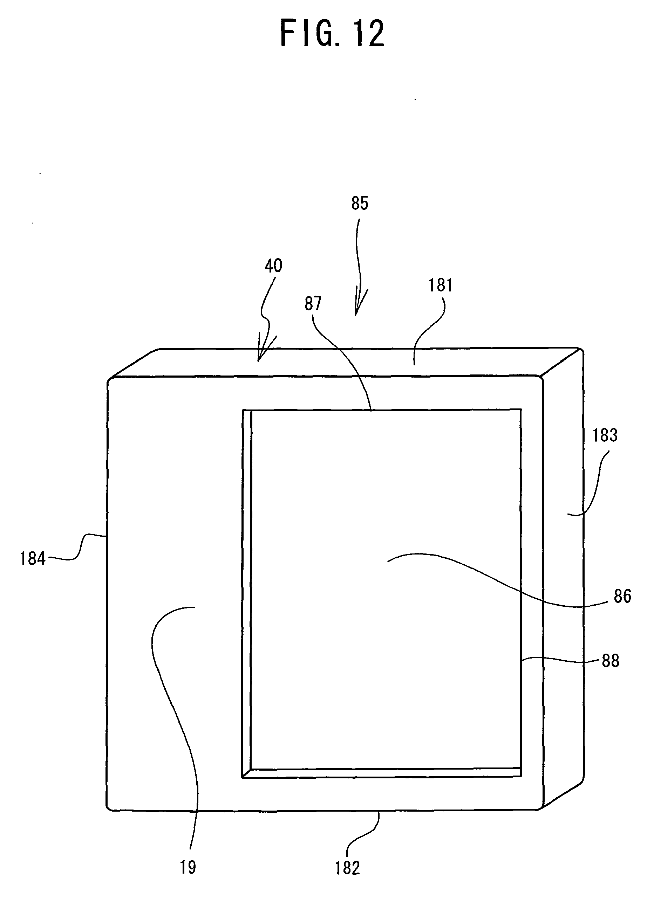

A recessed identification mark 86 that indicates the outline of the display screen 10 (refer to FIG. 1) may be provided on the rear surface 19 of a display device 85 as shown in FIG. 12. The recessed identification mark 86 has a rectangular shape in a rear view, and is formed as a recess relative to the outer surface of the housing 40. The recessed identification mark 86 indicates the position of the entire area of the display screen 10. More specifically, the recessed identification mark 86 is the recess surrounded by the outline of the display screen 10 when the display screen 10 is projected onto the rear surface 19. The recessed identification mark 86 includes a short side 87 indicating the short side 21 of the display screen 10, and a long side 88 indicating the long side 22 of the display screen 10.

When the user copies the display screen 10 of the display device 85 using the copy machine 100, the user may see the document table 101 from above and place the display device 85 such that the upper right corner of the recessed identification mark 86 in a rear view is overlaid with the rear left corner of the document table 101. At this time, the user may adjust the position of the display device 85 such that the short side 87 and the short side reference line 107 (refer to FIG. 5) are on the same straight line, and such that the long side 88 and the long side reference line 108 (refer to FIG. 5) are on the same straight line.

Thus, the outline of the display screen 10 of the display device 85 is indicated by the recessed identification mark 86, so that the user may clearly know the position of the display screen 10. Therefore, the user may easily perform the positioning of the display screen 10 of the display device 85 with respect to the reading area of the copy machine 100. Additionally, the recessed identification mark 86 has a recessed shape. Therefore, when the user places the display device 85 such that the document table 101 of the copy machine 100 and the display screen 10 of the display device 85 face each other and closes the document cover 103 (refer to FIG. 5), the recessed identification mark 86 and the document cover 103 do not interfere with each other, so the user may stably close the document cover 103.

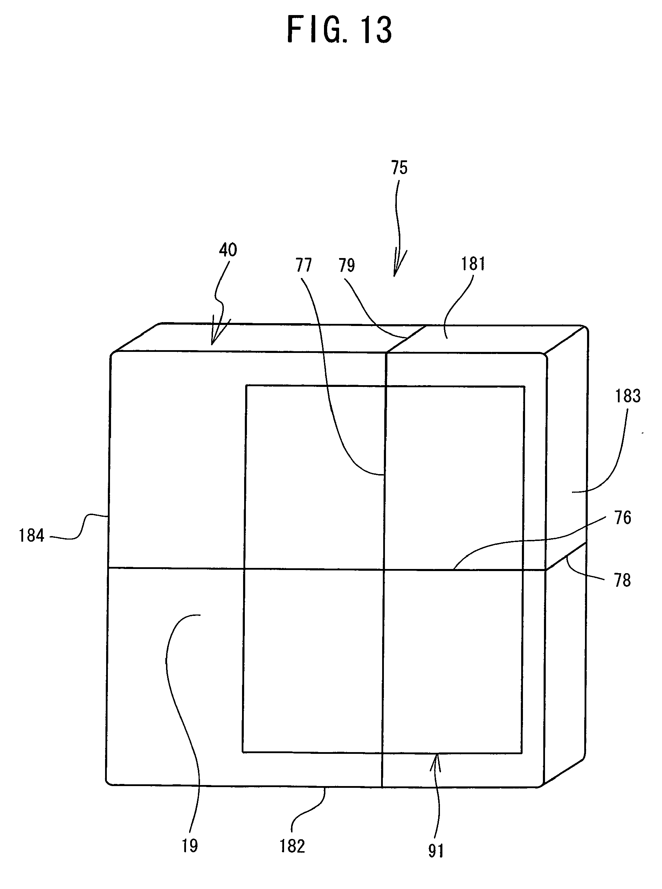

Identification marks that indicate the outline and the center 26 (refer to FIG. 1) of the display screen 10 (refer to FIG. 1) may be provided on the rear surface 19 and the side surfaces 181 to 184 of a display device 75 as shown in FIG. 13. A rear surface identification mark 76 that is a straight line and that indicates the center of the display screen 10 in the longitudinal direction (the upper and lower direction) is provided on the rear surface 19 of the display device 75. Further, a rear surface identification mark 77 that is a straight line and that indicates the center of the display screen 10 in the lateral direction (the right and left direction) is provided on the rear surface 19. More specifically, the rear surface identification mark 76 is the line corresponding to the center line of the display screen 10 in the longitudinal direction when the display screen 10 is projected onto the rear surface 19. The rear surface identification mark 77 is the line corresponding to the center line of the display screen 10 in the lateral direction when the display screen 10 is projected onto the rear surface 19. Therefore, the rear surface identification marks 76 and 77 intersect at right angles at the position corresponding to the center 26 (refer to FIG. 1) of the display screen 10. In addition, an outline identification mark 91 that indicates the outline of the display screen 10 is provided on the rear surface 19 of the display device 75. More specifically, the outline identification mark 91 is formed of a line that corresponds to the outline of the display screen 10 when the display screen 10 is projected onto the rear surface 19.

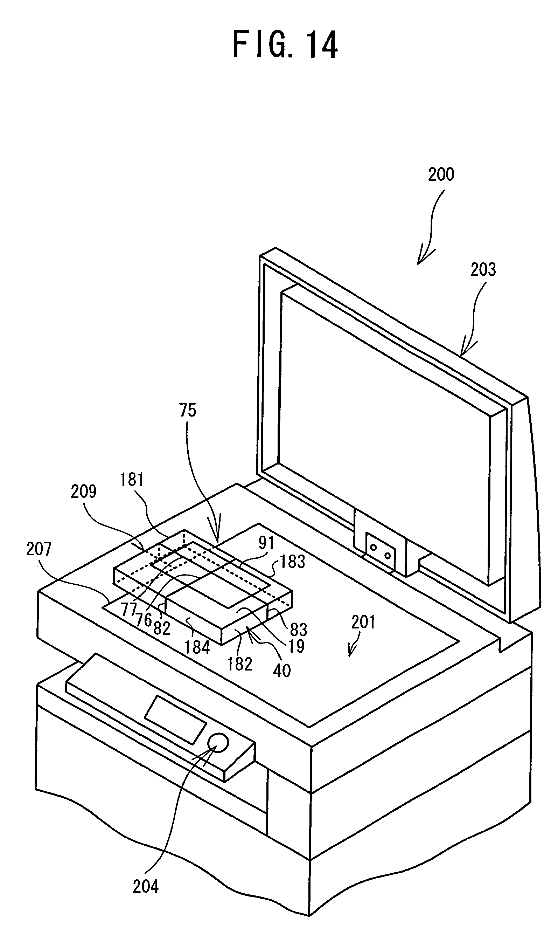

Side surface identification marks 78 and 79 are respectively provided on the left side surface 183 and the upper side surface 181 of the display device 75. Further, side surface identification marks 82 and 83 are respectively provided on the right side surface 184 and the lower side surface 182 of the display device 75, as shown in FIG. 14.

A copying method of the display screen 10 of the display device 75 will be described with reference to FIG. 14. A center reference system is used for a document table 201 of a copy machine 200 shown in FIG. 14. The center reference system is a system in which the center of a side of an object to be copied, which comes in contact with the short side reference line 207, is aligned to a center line 209, which serves as an indicator of the center of a short side reference line 207, when the user places the object to be copied on the document table 201. The short side reference line 207 is the straight line of the short side on the left side of the document table 201.

As shown in FIG. 14, the user may place the display device 75 on the document table 201 such that the document table 201 and the display screen 10 (refer to FIG. 1) face each other in a state where the display device 75 is overlaid with the short side reference line 207 of the document table 201. At this time, from above the document table 201, the user may check the outline identification mark 91 and the rear surface identification mark 77, which are provided on the rear surface 19 of the display device 75, and the short side reference line 207 and the center line 209, which are provided on the document table 201. Then, the user may adjust the position of the display device 75 such that an upper side portion of the outline identification mark 91 and the short side reference line 207 are on the same straight line, and such that the rear surface identification mark 77 and the center line 209 are on the same straight line. After that, the user may close a document cover 203 and perform copying by pressing a copy button 204.

As described above, in a case where the display device 75 that is provided with the identification marks that indicate the center 26 of the display screen 10 is used, it is possible to be compatible with the copy machine 200 for which the center reference system is used. Thus, it is possible to perform the positioning of the display screen 10 with respect to the reading area of the copy machine 200. In addition, the identification marks that indicate the center 26 of the display screen 10 are also provided on the side surfaces 181 to 184 of the display device 75. In a case where the side surface identification mark 79 (refer to FIG. 13) is used, even when the document cover 203 is closed and it is difficult to visually check the rear surface 19 of the display device 75, it is possible to perform the positioning of the display screen 10 with respect to the reading area of the copy machine 200 for which the center reference system is used.

Moreover, in a case where the outline identification mark 91 is used, even when the copy machine 100, for which the corner reference system is used and which is shown in FIG. 5, is used, it is possible to perform the positioning of the display screen 10 with respect to the reading area of the copy machine 100. In summary, the display device 75 may be used regardless of whether the corner reference system or the center reference system is used for the copy machine. Therefore, with the use of the display device 75, the user may perform the positioning by using an identification mark that is easy for the user to perform the positioning.

The short side 21 and the long side 22 shown in FIG. 1 correspond to "adjacent two sides" of the present invention. The recessed identification mark 86 shown in FIG. 12 corresponds to a "recess" of the present invention.

The structures of the display devices shown in the above-described embodiments are only an example, and it is obvious that various modifications may be applied within the scope of the present disclosure.

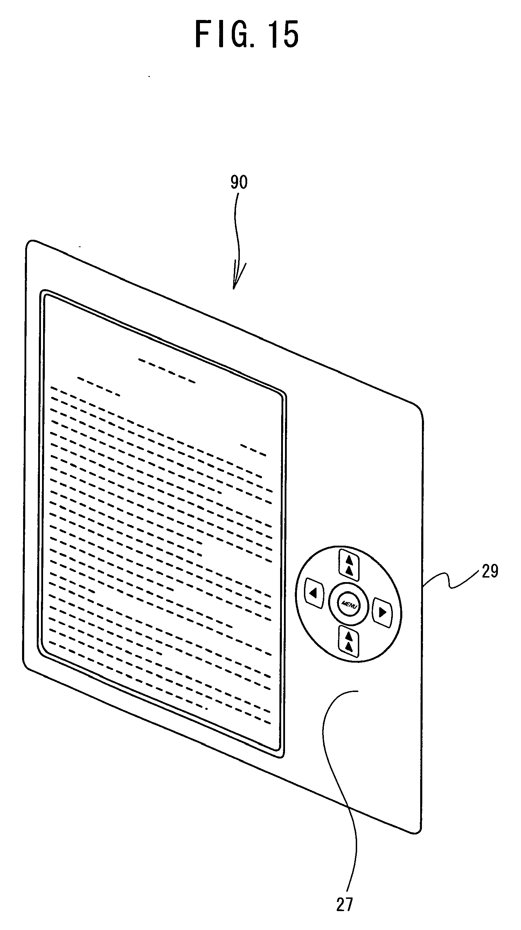

In the above-described embodiments, the display device 1 has a substantially rectangular parallelepiped shape, and includes the front surface 17, the side surfaces 181 to 184, and the rear surface 19. However, as shown in FIG. 15, a sheet-shaped display device 90, which does not substantially have any side surface, may be used. The display device 90 is formed by a front surface 27 and a rear surface 29, and has a rectangular shape that does not substantially have any side surface. An identification mark used for the positioning of the display screen 10 (refer to FIG. 1) of the display device 90 with respect to the reading area of the copy machine 100 (refer to FIG. 5) is provided only on the rear surface 29. In this case, linear identification marks that indicate the short side 21 (refer to FIG. 1) and the long side 22 (refer to FIG. 1) of the display screen 10 may be used as the identification mark, or an identification mark that indicates the center 26 of the display screen 10 may be used. An identification mark that indicates the outline of the display screen 10 may also be used as the identification mark. Further, an identification mark that indicates at least one of the four corners of the display screen 10 may be used as the identification mark.

In the above-described embodiments, each of the square-shaped identification marks 66 and 72 is the square with 1 cm sides. However, the length of one side of the square is not limited to 1 cm. Further, in the above-described embodiments, one example of the identification marks that indicate the corners of the display screen 10 is cross-shaped, and another example is square-shaped. However, the shape of the identification mark is not limited to these shapes. For example, the shape of the identification mark may be a rectangle, a triangle, a parallelogram, a rhombus, and the like.

In the above-described embodiments, the identification mark that is a straight line and indicates the position of the display screen 10 reaches both the ends of one of the rear surface 19 and the side surfaces 181 to 184. However, the identification mark that is the straight line may reach only one of both the ends of one of the rear surface 19 and the side surfaces 181 to 184.

In the above-described embodiments, an example is described in which the identification marks that have different shapes in the upper and lower direction of the display screen 10 are provided. However, the identification mark located on the upper side and the identification mark located on the lower side may have the same shape but be different colors.

While the invention has been described in connection with various exemplary structures and illustrative embodiments, it will be understood by those skilled in the art that other variations and modifications of the structures and embodiments described above may be made without departing from the scope of the invention. Other structures and embodiments will be apparent to those skilled in the art from a consideration of the specification or practice of the invention disclosed herein. It is intended that the specification and the described examples are illustrative with the true scope of the invention being defined by the following claims.

## Claims

1. A display device (1, 50, 55, 60, 65, 70, 75, 85, 90) comprising:
a housing (40) that includes at least a front surface (17, 27) and a rear surface (19, 29);
a display screen (10) that displays information on the front surface (17) of the housing (40); and
an identification mark (11, 12, 13, 14, 15, 16, 51, 52, 61, 62, 66, 71, 72, 76, 77, 78, 79, 82, 83, 86, 91) that is provided on a surface other than the front surface (17) and that indicates a position of the display screen (10) on the front surface (17).

2. The display device (1, 50, 60, 65, 70, 75, 85, 90) according to claim 1, wherein the identification mark (11, 12, 51, 52, 61, 62, 66, 71, 72, 76, 77, 86, 91) is provided on the rear surface (19, 29).

3. The display device (1, 55, 75) according to claim 1 or 2, wherein
the housing (40) includes a side surface (181, 182, 183, 184), and
the identification mark (13, 14, 15, 16, 56, 57, 78, 79, 82, 83) is provided on the side surface (181, 182, 183, 184).

4. The display device (1, 50, 55, 60, 75, 85, 90) according to any one of claims 1 to 3, wherein
the display screen (10) has a rectangular shape in a front view, and
the identification mark (11, 12, 13, 14, 15, 16, 51, 52, 56, 57, 61, 62, 87, 88, 91) indicates positions of adjacent two sides (21, 22) of an outline of the display screen (10).

5. The display device (1, 60, 65, 75, 85, 90) according to any one of claims 1 to 3, wherein
the display screen (10) has a rectangular shape in a front view, and
the identification mark (11, 12, 13, 14, 15, 16, 61, 62, 66, 86, 91) indicates a position of at least one corner of an outline of the display screen (10).

6. The display device (1, 60, 65, 70, 75, 85, 90) according to claim 5, wherein the identification mark (11, 12, 13, 14, 15, 16, 61, 62, 66, 71, 86, 91) indicates a position of an upper left corner (23) of the outline of the display screen (10), as the position of the at least one corner.

7. The display device (72, 75, 85, 90) according to claim 6, wherein the identification mark (72, 86, 91) indicates a position of a lower right corner (25) of the outline of the display screen (10), as the position of the at least one corner.

8. The display device (75, 85, 90) according to claim 5, wherein the identification mark (86, 91) indicates positions of four corners of the outline of the display screen (10).

9. The display device (70, 90) according to claim 5, wherein
the identification mark (71, 72) is provided in a plurality, one of the plurality of identification marks (71, 72) indicating an upper corner (23) of the outline of the display screen (10), and another of the plurality of identification marks (71, 72) indicating a lower corner (25) of the outline of the display screen (10), and
the one of the plurality of identification marks (71, 72) is different from the other one of the plurality of identification marks (71, 72).

10. The display device (75, 85, 90) according to claim 1 or 2, wherein the identification mark (86, 91) indicates an outline of an area of the rear surface (19, 29) onto which the display screen (10) is projected.

11. The display device (75, 90) according to any one of claims 1 to 10, wherein the identification mark (76, 77, 78, 79, 82, 83) indicates a position of a center (26) of the display screen.

12. The display device (1, 55, 60, 75, 90) according to any one of claims 1 to 11 wherein the identification mark (11, 12, 13, 14, 15, 16, 56, 57, 61, 62, 76, 77, 78, 79, 82, 83, 91) is formed by a line.

13. The display device (1, 50, 55, 60, 75, 90) according to any one of claims 1 to 12, wherein the identification mark (11, 12, 13, 14, 15, 16, 51, 52, 56, 57, 61, 62, 76, 77, 78, 79, 82, 83, 91) reaches an end of at least one of the rear surface (19, 29) and a side surface (181, 182, 183, 184) that is provided with the identification mark (11, 12, 13, 14, 15, 16, 56, 57, 61, 62, 76, 77, 78, 79, 82,83,91).

14. The display device (85) according to any one of claims 1 to 13, wherein the identification mark (86) is formed as a recess relative to an outer surface of the housing.
